# EUROPÄISCHE PATENTANMELDUNG

(11) **EP 2 369 394 A1**
(43) Veröffentlichungstag der Anmeldung: **28.09.2011**
(21) Anmeldenummer: 11155365.7
(22) Anmeldetag: 22.02.2011
(51) Int. Cl.: G02B 21/06, G01N 21/64

(54) **Vorrichtung und Verfahren zur simultanen Fluoreszenzanregung (2-Wellenlängen-IR)**

(30) Priorität: 15.03.2010 DE 102010015963
(71) Anmelder: Leica Microsystems CMS GmbH, 35578 Wetzlar (DE)
(72) Erfinder: Ulrich, Heinrich, 69121, Heidelberg (DE); Leimbach, Volker, 67065, Ludwigshafen (DE)
(74) Vertreter: Schaumburg, Thoenes, Thurn, Landskron, Eckert

(57) **Zusammenfassung**

Eine Vorrichtung umfasst zur simultanen Fluoreszenzanregung ein Fluoreszenzmikroskop. Die Vorrichtung hat eine Laserlichtquelle (20), die einen Lichtstrahl (22) erzeugt. Ein erster Strahlteiler (24) teilt den Lichtstrahl (22) in einen ersten Teillichtstrahl (26) und einen zweiten Teillichtstrahl (28) auf. Ein Wellenlängenkonverter (30) konvertiert die Wellenlänge des ersten Teillichtstrahls (26). Eine Mikroskopoptik (38), in die der konvertierte erste Teillichtstrahl (32) und der zweite Teillichtstrahl (28) eingekoppelt werden, richtet die beiden Teillichtstrahlen (28, 32) auf ein zu untersuchendes Objekt.

## Beschreibung

Die Erfindung betrifft eine Vorrichtung umfassend ein Fluoreszenzmikroskop zur simultanen Fluoreszenzanregung. Die Vorrichtung umfasst eine Laserlichtquelle, mit der ein Lichtstrahl erzeugt wird. Mit Hilfe einer Mikroskopoptik wird der Lichtstrahl auf ein zu untersuchendes Objekt gerichtet. Ferner betrifft die Erfindung ein Verfahren zur simultanen Fluoreszenzanregung mit Hilfe des Fluoreszenzmikroskops.

Zum Untersuchen von Strukturen und Vorgängen in einem zu untersuchenden Objekt, beispielsweise einer Probe, insbesondere einer Gewebeprobe, ist es bekannt, fluoreszierende Farbstoffe in die Probe einzubringen. Die Farbstoffmoleküle werden auf unterschiedliche bekannte Weisen mit Molekülen in der Probe gekoppelt. Beispielsweise werden fluoreszierende Proteine als Farbstoffmoleküle mit Proteinen der Probe fusioniert, wodurch die fluoreszierenden Proteine die Proteine der Probe markieren. Zur Herstellung dieser Fusionsproteine kann beispielsweise die DNA des zu untersuchenden Proteins mit der DNA des fluoreszierenden Proteins verbunden werden und in eine Form gebracht werden, die von der Zelle aufgenommen werden kann, so dass sie nachfolgend das Fusionsprotein selbständig herstellt. Das zu untersuchende Protein kann dann noch an eine vorgegebene Stelle in der Probe, beispielsweise einer Zelle transportiert werden. Mit Hilfe von Laserlicht werden die Farbstoffmoleküle zum Fluoreszieren angeregt und das so erzeugte Fluoreszenzlicht wird detektiert, wodurch die räumliche und zeitliche Verteilung des zu untersuchenden Proteins in der Probe, beispielsweise einer lebenden Zelle, einem Gewebe oder Organismus, beobachtet werden kann. Ferner ist es bekannt, mehrere unterschiedliche fluoreszierende Farbstoffe, insbesondere solche, die Fluoreszenzlicht unterschiedlicher Farbe emittieren, in die Probe einzubringen. Die unterschiedlichen Farbstoffpartikel können dann mit unterschiedlichen Molekülen, insbesondere Proteinen, in der Probe gekoppelt werden, so dass unterschiedliche Strukturen und/oder Vorgänge in der Probe voneinander unterschieden werden können.

Die unterschiedlichen Farbstoffe werden regelmäßig mit Licht unterschiedlicher Anregungswellenlängen angeregt. Daher werden Fluoreszenzmikroskope regelmäßig mit mehreren unterschiedlichen Laserlichtquellen gekoppelt, die zum Anregen der fluoreszierenden Farbstoffe Licht mit jeweils unterschiedlichen Wellenlängen erzeugen. Farbstoffpartikel, die regelmäßig zur Fluoreszenzmikroskopie verwendet werden sind beispielsweise GFP, PA-GFP, PS-CFP, Kaede, Kikume, Dendra oder Dronpa.

Es ist Aufgabe der Erfindung, eine Vorrichtung umfassend ein Fluoreszenzmikroskop zur simultanen Fluoreszenzanregung und ein Verfahren zur simultanen Fluoreszenzanregung mit Hilfe eines Fluoreszenzmikroskops zu schaffen, die bzw. das auf einfache Weise ermöglicht, gleichzeitig mehrere unterschiedliche Fluoreszenzfarbstoffe in einem Objekt zum Fluoreszieren anzuregen.

Die Aufgabe wird gelöst durch die Merkmale der unabhängigen Ansprüche. Vorteilhafte Ausgestaltungen sind in den Unteransprüchen angegeben.

Die Erfindung zeichnet sich gemäß einem ersten Aspekt dadurch aus, dass der Lichtstrahl mit Hilfe eines ersten Strahlteilers in einen ersten Teillichtstrahl und einen zweiten Teillichtstrahl aufgeteilt wird. Ein Wellenlängenkonverter konvertiert die Wellenlänge des ersten Teillichtstrahls. Mit Hilfe einer Mikroskopoptik, in die der konvertierte erste Teillichtstrahl und der zweite Teillichtstrahl eingekoppelt werden, werden die beiden Teillichtstrahlen auf ein zu untersuchendes Objekt gerichtet.

Dies ermöglicht, das Objekt mit Laserstrahlung mindestens zweier unterschiedlicher Wellenlängen zu beleuchten und so mindestens zwei unterschiedliche fluoreszierende Farbstoffpartikel in dem Objekt, insbesondere einer Probe, zum Fluoreszieren anzuregen. Dabei kann auf eine zweite Laserlichtquelle verzichtet werden, wodurch der gesamte Aufbau einfach und günstig hergestellt werden kann. Dies ermöglicht insbesondere bei der Zwei-Photonen-Mikroskopie, auf einfache Weise unterschiedliche Farbstoffpartikel und -proteine anzuregen und so simultan unterschiedliche Strukturen und/oder Vorgänge in dem Objekt, insbesondere einer Gewebeprobe oder Zelle, sichtbar zu machen.

In vorteilhaften Ausgestaltungen sind für je einen oder beide Teillichtstrahlen je ein Modulator, je eine Halbwellenplatte und/oder je ein Polarisationsfilter vorgesehen, die den entsprechender Teillichtstrahl modulieren, dessen Polarisation drehen bzw. den Teillichtstrahl polarisieren. Dies ermöglicht neben der Modulation, der Drehung der Polarisation und der Polarisation der Teillichtstrahlen unterschiedliche Signale voneinander zu trennen und/oder die entsprechenden Teillichtstrahlen abzuschwächen.

Die Erfindung zeichnet sich gemäß einem zweiten Aspekt dadurch aus, dass der Lichtstrahl in zwei Teillichtstrahlen aufgeteilt wird, wobei die

Wellenlänge eines der beiden Teillichtstrahlen konvertiert wird. Der unkonvertierte und der konvertierte Teillichtstrahl werden in die Mikroskopoptik eingekoppelt, welche die beiden Teillichtstrahlen auf das zu untersuchende Objekt richtet.

Ausführungsbeispiele der Erfindung sind nachfolgend anhand von schematischen Zeichnungen näher erläutert.

Es zeigen:
- Figur 1: eine erste Ausführungsform einer Vorrichtung umfassend ein Fluoreszenzmikroskop,
- Figur 2: eine zweite Ausführungsform der Vorrichtung umfassend das Fluoreszenzmikroskop.

Elemente gleicher Konstruktion oder Funktion sind figurenübergreifend mit den gleichen Bezugszeichen gekennzeichnet.

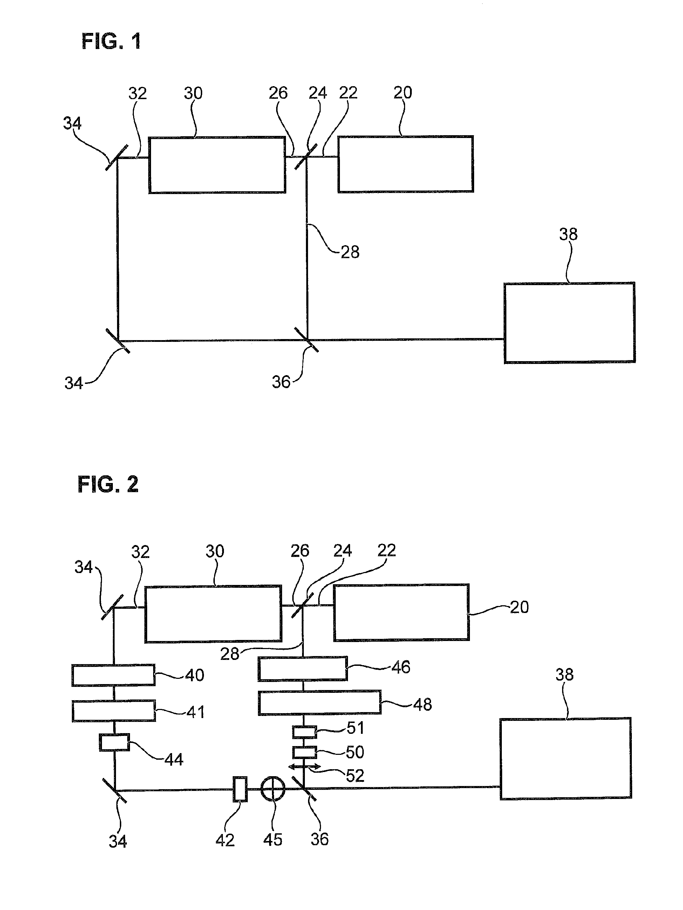

Figur 1 zeigt eine Vorrichtung, die ein Fluoreszenzmikroskop umfasst. Das Fluoreszenzmikroskop umfasst eine Laserlichtquelle 20, die einen Lichtstrahl 22 erzeugt. Der Lichtstrahl 22 ist auf einen Strahlteiler 24 gerichtet. Der Strahlteiler 24 teilt den Lichtstrahl 22 in einen ersten Teillichtstrahl 26 und einen zweiten Teillichtstrahl 28 auf und umfasst beispielsweise einen teildurchlässigen Spiegel. Der erste Teillichtstrahl 26 durchläuft einen Wellenlängenkonverter 30. Der Wellenlängenkonverter ist ein optisch parametrischer Oszillator (OPO). Alternativ dazu kann ein anderer Wellenlängenkonverter 30 vorgesehen sein, beispielsweise können die Laserlichtquelle 20 und der Wellenlängenkonverter 30 zusammen einen Weißlichtlaser bilden, wobei der Wellenlängenkonverter 30 der Bestandteil des Weißlichtlasers ist, der das schmalbandige Licht der Laserlichtquelle 20 in breitbandiges, also weißes Licht, aufspaltet. Ferner kann als Wellenlängenkonverter 30 auch ein anderes Element verwendet werden, das eine Veränderung der Wellenlänge des Lichtstrahls 22 ermöglicht, insbesondere auch ein Laser, der mit Hilfe der Laserlichtquelle 20 gepumpt wird. Ferner können alternativ zu dem gezeigten Ausführungsbeispiel die Laserlichtquelle 20, der Wellenlängenkonverter 30 und/oder der erste Strahlteiler 24 innerhalb eines einzigen, nicht dargestellten, Gehäuses angeordnet sein.

Ein mit Hilfe des Wellenlängenkonverters 30 konvertierter erster Teillichtstrahl 32 ist über einen Umlenkspiegel 34 auf einen Strahlvereiniger 36 gerichtet, der den konvertierten ersten Teillichtstrahl 32 mit dem zweiten Teillichtstrahl 28 vereinigt und auf die Mikroskopoptik 38 richtet. Die Mikroskopoptik 38 umfasst insbesondere ein Objektiv, eine Scaneinheit zum Scannen des Objekts, insbesondere einer Probe, und einen Probenhalter.

Die Laserlichtquelle 20 ist ein Titan-Saphir-Laser und erzeugt Laserlicht mit einer Wellenlänge zwischen 680 und 1080 nm. Der Wellenlängenkonverter 30 konvertiert die Wellenlänge des ersten Teillichtstrahls 26 derart, dass der konvertierte erste Teillichtstrahl 32 Wellenlängen zwischen 1100 und 1600 nm aufweist. Alternativ zu dem Titan-Saphir-Laser kann auch ein anderer Kurzpulslaser, beispielsweise ein Faserlaser, oder ein anderer IR-Laser verwendet werden.

Alternativ zu dem Fluoreszenzmikroskop kann die Vorrichtung ein nicht mit fluoreszierenden Stoffen arbeitendes Mikroskop verwendet werden. Insbesondere können die eine Laserlichtquelle 20 und der Wellenlängenkonverter 30 auch in anderen Mikroskopen angeordnet sein. Vorzugsweise entspricht jedoch die Mikroskopoptik 38 bis auf die Lichtquelle einem bekannten Fluoreszenzmikroskop. Der Strahlteiler 24, die Umlenkspiegel 34 und/oder der Strahlvereiniger 36 können als Polarisationsfilter, Polarisationsteiler, Farbteiler und/oder Farbfilter ausgebildet sein, so dass verlustarm nur Licht vorgegebener Polarisation oder Wellenlänge hin zu der Mikroskopoptik 38 abgelenkt bzw. durchgelassen wird.

Da mit Hilfe des Strahlteilers 24 zwei Teillichtstrahlen 26, 28 erzeugt werden, wobei einer der Teillichtstrahlen, insbesondere der erste Teillichtstrahl 26 mit Hilfe des Wellenlängenkonverters 30 konvertiert wird, können mindestens zwei unterschiedliche fluoreszierende Farbstoffpartikel oder fluoreszierende Proteine in dem Objekt simultan, also gleichzeitig zum Fluoreszieren angeregt werden.

Dies ist insbesondere bei der Zwei-Photonen-Mikroskopie vorteilhaft, bei der durch näherungsweise gleichzeitige Absorption zweier langwelliger Photonen ein fluoreszierendes Farbstoffmolekül so angeregt wird, dass dieses ein kurzwelliges Photon emittiert. Dabei kann insbesondere der nutzbare Wellenlängenbereich für die Zwei-Photonen-Mikroskopie weiter in den roten, insbesondere infraroten Bereich der Fluoreszenzfarbstoffe ausgedehnt werden. Darüber hinaus kann die Vorrichtung, insbesondere die Laserlichtquelle 20 und der Wellenlängenkonverter 30, allgemein für Mehr-Photonen-Mikroskopie verwendet werden.

Figur 2 zeigt eine zweite Ausführungsform der Vorrichtung gemäß Figur 1. Dabei umfasst die zweite Ausführungsform alle Elemente der ersten Ausführungsform. Zusätzlich umfasst die zweite Ausführungsform einen ersten Modulator 40, der den konvertierten ersten Teillichtstrahl 32 moduliert. Der modulierte erste Teillichtstrahls 32 ist über eine erste Halbwellenplatte 41 und einen ersten Polarisationsfilter 44 auf eine erste Kompensationsoptik 42 gerichtet. Die erste Kompensationsoptik 42 bildet den ersten Teillichtstrahl 32 auf den Strahlvereiniger 36 ab. Beim Auftreffen auf den Strahlvereiniger 36 ist der erste Teillichtstrahl 32 s-polarisiert in Bezug auf die Einfallsebene des Strahlvereinigers 36, was in Figur 2 durch ein Symbol 45 für die S-Polarisation dargestellt ist. In anderen Worten steht die Polarisation des ersten Teillichtstrahls 32 senkrecht auf der Einfallsebene des Strahlvereinigers 36.

Der erste Modulator 40 moduliert den konvertierten ersten Teillichtstrahl 32. Eine Polarisation des modulierten ersten Teillichtstrahls 32 wird mit Hilfe der ersten Halbwellenplatte 41 gedreht. Ferner kann der modulierte erste Teillichtstrahl 32 mit Hilfe des ersten Polarisationsfilters 44 polarisiert, insbesondere s-polarisiert werden. Das Drehen der Polarisation kann in Zusammenwirken mit dem Polarisieren des ersten Teillichtstrahls 32 auch zum Abschwächen des ersten Teillichtstrahls 32 genutzt werden. Die erste Kompensationsoptik 42 korrigiert einen Farbfehler des konvertierten ersten Teillichtstrahls 32.

Der zweite Teillichtstrahl 28 durchläuft einen zweiten Modulator 46, eine zweite Halbwellenplatte 48, einen zweiten Polarisationsfilter 51 und trifft auf eine zweite Kompensationsoptik 50. Der zweite Teillichtstrahl 28 ist beim Auftreffen auf den Strahlvereiniger 36 p-polarisiert, was in Figur 2 durch ein Symbol 52 für die P-Polarisation dargestellt ist. In anderen Worten ist die Polarisation des zweiten Teillichtstrahls 28 parallel zu der Einfallsebene des Strahlvereinigers 36.

Der zweite Modulator 46 moduliert den zweiten Teillichtstrahl 28. Die zweite Halbwellenplatte dreht eine Polarisation des zweiten Teillichtstrahls 28. Zum aktiven Drehen der Polarisation des zweiten Teillichtstrahls 28 können die erste und/oder die zweite Halbwellenplatte 41, 48 mit je einem Stellelement gekoppelt sein, insbesondere motorisiert gedreht werden. Alternativ oder zusätzlich zu den Modulatoren 40, 46 können die entsprechenden Teillichtstrahlen 28, 32 auch mit Hilfe der Ihnen zugeordneten Halbwellenplatten 41, 48 moduliert werden. Falls die Halbwellenplatten 41, 48 zum Modulieren der Teillichtstrahlen 28, 32 verwendet werden, kann auf den ersten bzw. zweiten Modulator 40, 46 verzichtet werden. Der zweite Polarisationsfilter 51 p-polarisiert den zweiten Teillichtstrahl 28. Die zweite Kompensationsoptik 50 korrigiert einen Farbfehler des zweiten Teillichtstrahls 28. Das Drehen der Polarisation und das nachfolgende Polarisieren des zweiten Teillichtstrahls 28 können zum Abschwächen des zweiten Teillichtstrahls 28 genutzt werden.

Die beiden Kompensationsoptiken 42, 50 korrigieren die Farbfehler, indem dem entsprechenden Teillichtstrahl 28, 32 eine Konvergenz oder Divergenz aufgeprägt wird. Insbesondere ist eine bezüglich der Wellenlängen getrennte Kompensation des Farblängsfehlers der Mikroskopoptik 38 und des Fluoreszenzmikroskops mit Hilfe der Kompensationsoptiken 42, 50 möglich. Die Modulatoren 40, 46 können zum schnellen Ein- und Ausschalten eines der beiden Teillichtstrahlen 28, 32 verwendet werden. Als Modulatoren 40, 46 eignen sich insbesondere akusto-optische oder elektro-optische Modulatoren (AOM bzw. EOM).

Die Laserlichtquelle 20 erzeugt vorzugsweise Laserlichtpulse mit einer Dauer von ca. 100 Femtosekunden. Alternativ dazu können auch andere Laserlichtpulse erzeugt werden oder es kann permanentes Licht erzeugt werden.

Die Erfindung ist nicht auf die angegebenen Ausführungsbeispiele beschränkt. Beispielsweise können zum gleichzeitigen Erzeugen zweier Laserlichtstrahlen mit unterschiedlichen Wellenlängen auch die Wellenlängen beider Teillichtstrahlen 26, 28 konvertiert werden. Ferner können die Laserlichtquelle 20 und der bzw. die Wellenlängenkonverter 30 bei beliebigen Vorrichtungen verwendet werden, bei denen Laserlicht mit zwei unterschiedlichen Wellenlängen benötigt wird. Alternativ zu dem in Figur 2 gezeigten Ausführungsbeispiel können auch gegenüber dem ersten Ausführungsbeispiel weniger oder mehr zusätzliche Elemente vorhanden sein. Beispielsweise können nur ein Modulator, nur ein Linsensystem und/oder nur ein Polarisationsfilter, insbesondere im Strahlengang ausschließlich eines der Teillichtstrahlen 28, 32, oder auch entsprechend mehrere Modulatoren, Linsensysteme und Polarisationsfilter vorgesehen sein. Insbesondere bedingen oder erübrigen sich die Modulatoren, die Halbwellenplatten und die Polarisationsfilter gegenseitig, da beispielsweise je nach verwendetem Wellenlängenkonverter 30 oder Modulator der entsprechenden Teillichtstrahl 26, 28 bereits passend polarisiert sein kann und dessen Polarisation nicht mehr gedreht oder geändert werden muss. Je nach Bedarf kann es jedoch wichtig sein, dass die beiden Teillichtstrahlen 26, 28 zum Zeitpunkt ihrer Vereinigung unterschiedlich, beispielsweise orthogonal zueinander, polarisiert sind. Ferner kann der Lichtstrahl 22 auch in drei oder mehr Teillichtstrahlen aufgeteilt sein, deren Wellenlängen dann zumindest teilweise durch entsprechende Wellenlängenkonverter konvertiert werden, so dass mit nur einer Laserlichtquelle 20 mehrere Teillichtstrahlen unterschiedlicher Wellenlänge erzeugt werden.

### Bezugszeichenliste:

- 20: Laserlichtquelle
- 22: Lichtstrahl
- 24: Strahlteiler
- 26: erster Teillichtstrahl
- 28: zweiter Teillichtstrahl
- 30: Wellenlängenkonverter
- 32: konvertierter erster Teillichtstrahl
- 34: Umlenkspiegel
- 36: Strahlvereiniger
- 38: Mikroskopoptik
- 40: erster Modulator
- 41: erste Halbwellenplatte
- 42: erste Kompensationsoptik
- 44: erster Polarisationsfilter
- 45: Symbol für S-Polarisierung
- 46: zweiter Modulator
- 48: zweite Halbwellenplatte
- 50: zweite Kompensationsoptik
- 51: zweiter Polarisationsfilter
- 52: Symbol für P-Polarisierung

## Patentansprüche

1. Vorrichtung umfassend ein Fluoreszenzmikroskop zur simultanen Fluoreszenzanregung,
mit einer Laserlichtquelle (20), die einen Lichtstrahl (22) erzeugt,
einem ersten Strahlteiler (24), der den Lichtstrahl (22) in einen ersten Teillichtstrahl (26) und einen zweiten Teillichtstrahl (28) aufteilt,
einem Wellenlängenkonverter (30), der die Wellenlänge des ersten Teillichtstrahls (26) konvertiert,
und mit einer Mikroskopoptik (38), in die der konvertierte erste Teillichtstrahl (32) und der zweite Teillichtstrahl (28) eingekoppelt werden und die die beiden Teillichtstrahlen (28, 32) auf ein zu untersuchendes Objekt richtet.

2. Vorrichtung nach Anspruch 1,
mit einem ersten Modulator (40), der den konvertierten ersten Teillichtstrahl (32) moduliert, und/oder mit einem zweiten Modulator (46), der den zweiten Teillichtstrahl (28) moduliert.

3. Vorrichtung nach einem der vorstehenden Ansprüche,
mit einer ersten Halbwellenplatte (41), die die Polarisation des konvertierten ersten Teillichtstrahls (32) dreht, und/oder mit einer zweiten Halbwellenplatte (48), die die Polarisation des zweiten Teillichtstrahls (28) dreht

4. Vorrichtung nach einem der vorstehenden Ansprüche,
mit einem ersten Polarisationsfilter (44), der den konvertierten ersten Teillichtstrahl (32) polarisiert, und/oder mit einem zweiten Polarisationsfilter (51), der den zweiten Teillichtstrahl (28) polarisiert.

5. Vorrichtung nach einem der vorstehenden Ansprüche,
bei der der erste Strahlteiler (24) innerhalb eines Gehäuses des Wellenlängenkonverters (30) angeordnet ist.

6. Vorrichtung nach einem der vorstehenden Ansprüche,
bei der der Wellenlängenkonverter (30) einen optisch parametrischen Oszillator umfasst.

7. Vorrichtung nach einem der vorstehenden Ansprüche,
bei der die Laserlichtquelle (20) einen Titan-Saphir-Laser umfasst.

8. Vorrichtung nach einem der vorstehenden Ansprüche,
bei der die Laserlichtquelle (20) Laserlicht mit einer Wellenlänge zwischen 680 und 1080 nm erzeugt und bei der der konvertierte erste Teillichtstrahl (32) eine Wellenlänge zwischen 1100 und 1600 nm hat.

9. Verfahren zur simultanen Fluoreszenzanregung mit Hilfe eines Fluoreszenzmikroskops,
bei dem mit einer Laserlichtquelle (20) ein Lichtstrahl (22) erzeugt wird,
der Lichtstrahl (22) in einen ersten Teillichtstrahl (26) und einen zweiten Teillichtstrahl (28) aufgeteilt wird,
die Wellenlänge des ersten Teillichtstrahls (26) konvertiert wird,
und bei dem der konvertierte erste Teillichtstrahl (32) und der zweite Teillichtstrahl (28) in eine Mikroskopoptik (38) eingekoppelt werden, die die beiden Teillichtstrahlen (28, 32) auf ein zu untersuchendes Objekt richtet.

10. Verfahren nach Anspruch 9,
bei dem der konvertierte erste Teillichtstrahl (32) und/oder der zweite Teillichtstrahl (28) moduliert werden.

11. Verfahren nach einem der Ansprüche 9 oder 10,
bei dem die Polarisation des konvertierten ersten Teillichtstrahls (32) und/oder des zweiten Teillichtstrahls (28) gedreht wird.

12. Verfahren nach einem Ansprüche 9 bis 11,
bei dem der konvertierte erste Teillichtstrahl (32) und/oder der zweite Teillichtstrahl (28) polarisiert werden.

13. Verfahren nach einem der Ansprüche 9 bis 12,
bei dem mit Hilfe der Laserlichtquelle (20) Laserlicht mit einer Wellenlänge zwischen 680 und 1080 nm erzeugt wird und bei dem das so erzeugte Laserlicht zu einer Wellenlänge zwischen 1100 und 1600 nm konvertiert wird.

14. Verfahren nach einem der Ansprüche 9 bis 13,
bei dem mit Hilfe der Laserlichtquelle (20) gepulstes Laserlicht erzeugt wird.
